# EUROPEAN PATENT SPECIFICATION

(11) **EP 2 730 768 B1**
(45) Date of publication and mention of the grant of the patent: **20.04.2016**
(21) Application number: 12807474.7
(22) Date of filing: 01.02.2012
(51) Int. Cl.: F02C 7/36, B60L 11/02, F01D 15/02

(54) **GAS TURBINE ARRANGEMENT FOR A LOCOMOTIVE**
GASTURBINENANORDNUNG FÜR EINE LOKOMOTIVE
INSTALLATION À TURBINE À GAZ POUR LOCOMOTIVE

(30) Priority: 07.07.2011 RU 2011127665
(43) Date of publication of application: 14.05.2014
(73) Proprietor: Open Joint Stock Company "Russian Railways", Moscow 107174 (RU)
(72) Inventor: NESTEROV, Eduard Ivanovich, Kolomna Moscow Region 140404 (RU); KOSSOV, Valeriy Semyenovich, Kolomna Moscow Region 140411 (RU); RUDENKO, Vladimir Fedorovich, Moscow 109341 (RU); SAZONOV, Igor Valentinovich, Kolomna Moscow Region 140407 (RU)
(74) Representative: Glawe, Delfs, Moll
(86) International application number: PCT/RU2012/000050
(87) International publication number: WO 2013/006083

(56) References cited:
- RU-C1- 2 053 896
- RU-C1- 2 312 239
- SU-A1- 686 918
- SU-A1- 1 013 315
- US-A- 2 683 964
- US-A- 3 457 877
- US-A- 3 457 877
- US-A1- 2006 272 333

## Description

### Field of the Invention

The invention relates in general to engines for rail transport, specifically to locomotive gas-turbine engines running on liquefied natural gas, gas turbine fuel and heavy grades of oil fuel, and in particular to power transfer between shafts of a gas-turbine arrangement and between a gas-turbine arrangement and asynchronous traction engines of a locomotive.

### Description of Prior Art

The gas-turbine engine GT 3,5 for gas-turbine engine locomotives - of cargo G1 type and passenger GP1 type - is known that comprises a 12-stage axial-flow compressor, 6-section combustion chambers, a 4-stage axial-flow turbine and that is connected through a reduction gear to three traction DC generators. Due to low gas-dynamic cycle parameters, efficiency of this engine is 18.3% (see: Voronkov L.A., Zarhe S.M., et al. "Domestic Gas-Turbine Engine Locomotives" (in Russian), Machinostroyenie Publishing House, Moscow, 1971, p. 45-52).

Due to the use of a simple single-shaft configuration that is a disadvantage of this engine, fuel consumption at no load is 0.35 of that at the full power. The time share of idling is 0.45 - 0.52 during the engine operation, which results in 2.5-times increase in the specific fuel consumption for transportation operation measure in comparison to a diesel locomotive. Furthermore, this gas-turbine engine locomotive is equipped with an auxiliary diesel-generator set for the purposes of starting the gas-turbine engine and fulfilling shunting operations.

The gas-turbine engine NK-361 for a gas-turbine engine locomotive is known that is made according to double-shaft configuration with a free power turbine. The use of this configuration enabled to improve the cycle gas-dynamic parameters and achieve the engine efficiency at the level of 25.3% (see: "The first gas-turbine engine locomotive in the world that runs on liquefied natural gas" (in Russian), AutoGazComplex Magazine, No. 3(45), 2009).

This engine is disadvantageous in that idling fuel consumption remains at the level of 0.268 in comparison to that at full power, taking into account that fuel consumption at no load of modern diesel-generator locomotives is 0.015 of that at full power. Furthermore, this gas-turbine engine locomotive is equipped with an auxiliary diesel-generator set for the purposes of starting the gas-turbine engine and fulfilling shunting operations.

A locomotive power unit is known wherein a gas-turbine engine is made according to double-shaft configuration with a free power turbine. This gas-turbine engine comprises low- and high-pressure compressors driven by medium- and high-pressure turbines connected through a gas path with a low-pressure free power turbine. The essence of the invention is to improve starting of the power unit and increase cost-efficiency thereof (RU Patent No. 2308383C1, IPC B60K 5/00, 2007).

This configuration has the same disadvantages as the previous ones, namely: high idling fuel consumption and the presence of an auxiliary diesel generator set in the gas-turbine engine locomotive.

A gas-turbine power unit for a locomotive is known, taken as the prototype, that is made according to an configuration with a free medium-pressure turbine. In order to improve efficiency of this power unit, the configuration provides for air cooling between compressors and for heating of compressed air before the combustion chamber with the use of exhaust gases from the low-pressure turbine. The power unit is made as two low- and high-pressure engines and has intermediate cooling and heating of air in a regenerator. The high-pressure engine is arranged above the low-pressure engine. The second combustion chamber is provided between the high-pressure turbine and the medium-pressure turbine. Such configuration of the power unit enables to achieve efficiency at a level of 42 - 45% (US Patent No. 3457877(A), IPC B61C 5/00, 1969).

A disadvantage of this gas-turbine power unit is that fuel consumption at no load still remains high, equal to 0.15 of that at full power, which is 100 times greater than for a diesel locomotive. Fuel consumption at low loads also remains high, and an auxiliary diesel-generator is provided for moving a gas-turbine engine locomotive without a crew and for supplying electric power to auxiliary loads, that requires space for installation, availability of a second fuel in the locomotive and extra expenses for maintenance.

### Summary of the Invention

The technical effect of the invention is: significant reduction of fuel consumption at no load and at low gas-turbine arrangement loads, which significantly reduces specific fuel consumption for transportation operation measure and makes it closer to performance of diesel locomotives; elimination of an auxiliary diesel-generator or high-capacity accumulator due to the use of the proposed gas-turbine arrangement. All this enables to reduce locomotive dimensions, weight, axle load and operation expenses.

The said technical effect is achieved due to the fact that the locomotive gas-turbine arrangement comprises three pressure shafts, wherein a high-pressure shaft is arranged above low-pressure and medium-pressure shafts; the low-pressure shaft is provided with a low-pressure compressor having the inlet fitting and being connected by a shaft to the low-pressure turbine and by a gas connection to the medium-pressure turbine; the medium-pressure shaft is provided with a medium-pressure turbine connected by a shaft to the first synchronous traction generator and by a channel to the intermediate combustion chamber; the high-pressure shaft is provided with a high-pressure compressor connected by a shaft to a high-pressure turbine and by a channel to the main combustion chamber; an intermediate cooler is arranged between the low-pressure and high-pressure compressors and connected by channels to these compressors; a regenerative heat exchanger is arranged between the high-pressure compressor and the high-pressure turbine and is provided with an exhaust fitting and connected by channels to a low-pressure turbine and the high-pressure compressor, the said heat exchanger being provided with a heat exchanger for heating fuel; the low-pressure compressor is provided with a rotating inlet guiding apparatus driven by a block; a bypass valve is installed on an intermediate cooler; the main combustion chambers are arranged in the regenerative heat exchanger that are connected to the high-pressure turbine by a channel; the high-pressure compressor is connected to a starter through a shaft and a reduction gear; and the high-pressure turbine is connected to the second synchronous traction generator by a shaft in order to enable the gas-turbine arrangement to be operated at no load and at low loads from the high-pressure shaft only.

### Brief Description of the Drawings

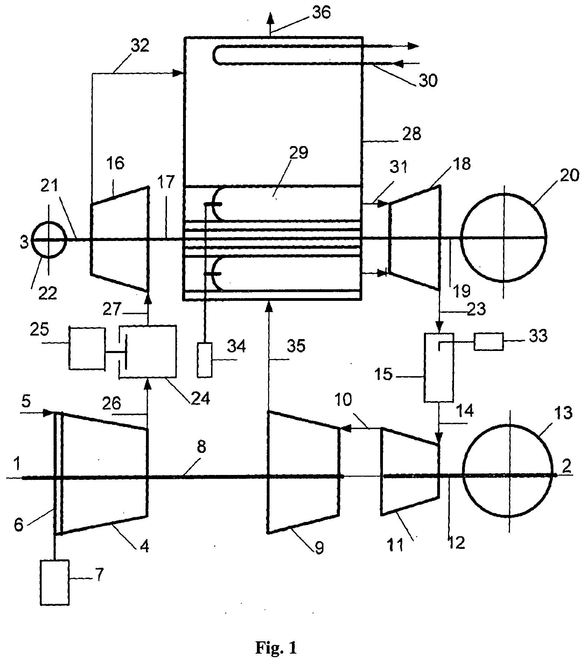

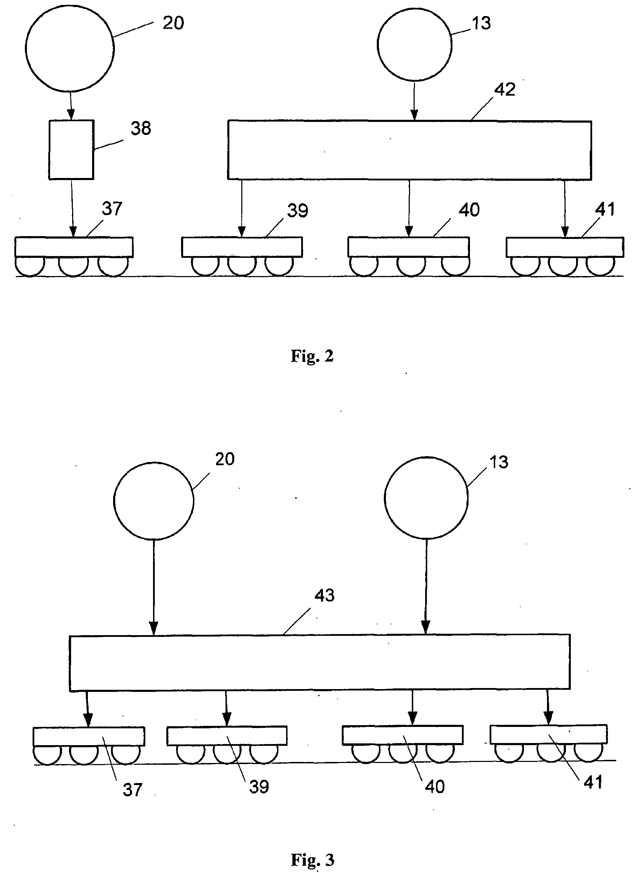

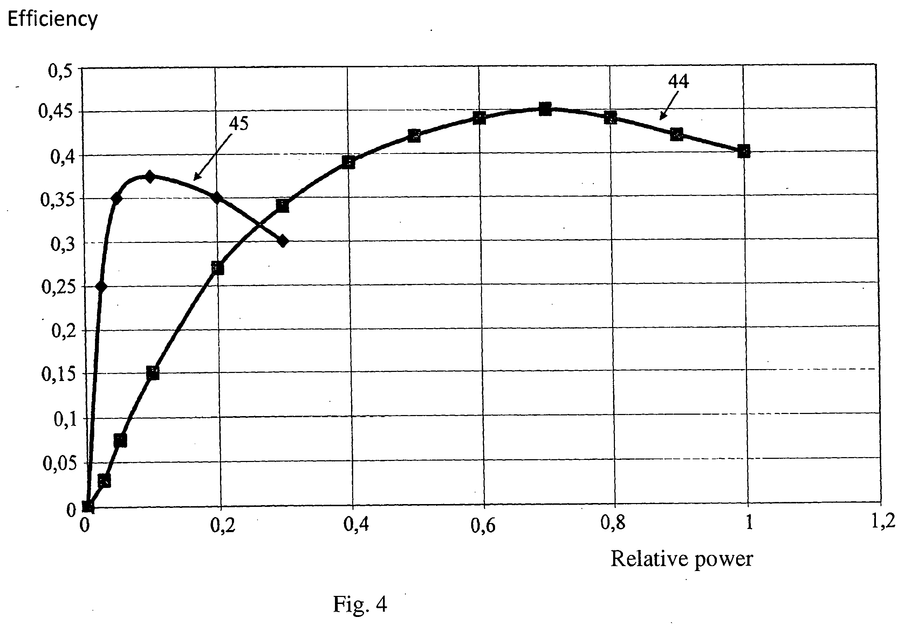

Figure 1 shows the configuration of the proposed gas-turbine arrangement for a locomotive; Figures 2, 3 show individual diagrams of connections between the synchronous traction generators and the asynchronous traction engines mounted on bogies. Figure 4 shows how the gas-turbine arrangement efficiency is changed depending on relative power taken from the unit.

### Description of the Best Embodiment

The gas-turbine arrangement for a locomotive (Figure 1) comprises three pressure shafts, one of them being arranged above the other two. The low-pressure shaft 1 and the medium-pressure shaft 2 are arranged coaxially and below the high-pressure shaft 3. The low-pressure shaft 1 comprises a low-pressure compressor 4 having an inlet fitting 5 and a rotating inlet guiding apparatus 6 driven by a block 7. The low-pressure compressor 4 is connected by a shaft 8 to a low-pressure turbine 9 and by a gas connection through a channel 10 to a medium-pressure turbine 11. The medium-pressure shaft 2 comprises a medium-pressure turbine 11 connected by a shaft 12 to a first synchronous traction generator 13 and by a channel 14 to an intermediate combustion chamber 15. The high-pressure shaft 3 comprises a high-pressure compressor 16 connected by a shaft 17 to a high-pressure turbine 18, by a shaft 19 to a second synchronous traction generator 20, by a shaft 21 and a reduction gear (not shown) to a starter 22. The high-pressure turbine 18 is connected by a channel 23 to the intermediate combustion chamber 15 which is connected to the medium-pressure turbine 11 through the channel 14. An intermediate cooler 24 with a bypass valve 25 is arranged between the low-pressure compressor 4 and the high-pressure compressor 16. The low-pressure compressor 4 is connected to the intermediate cooler 24 through a channel 26, and the cooler 24 is connected to the high-pressure compressor 16 through a channel 27. A regenerative heat exchanger 28, together with a combustion chamber 29 and a heat exchanger 30 for fuel heating arranged therein, is disposed between the high-pressure compressor 16 and the high-pressure turbine 18. The combustion chamber 29 is connected to the high-pressure turbine 18 by a channel 31. The high-pressure compressor 16 is connected to the regenerative heat exchanger 28 by a channel 32. The gas-turbine arrangement is provided with a microprocessor device (not shown) that controls the processes of starting the gas-turbine arrangement, applying loads to the synchronous traction generators 13 and 20, supplying fuel to the combustion chambers 15 and 29 by acting on fuel metering devices 33 and 34, and shuts down, if necessary, the low-pressure shaft 1 by closing the inlet guiding apparatus 6 via the block 7 and opening the air intake into the high-pressure compressor 16 from the common air intake chamber (not shown) by opening the bypass valve 25 into the intermediate cooler 24. The low-pressure turbine 9 is connected, through a channel 35, to the regenerative heat exchanger 28 which has an exhaust fitting 36 installed thereon. The synchronous traction generators 13 and 20 may be connected to the asynchronous traction engines of a locomotive differently.

The second synchronous traction generator 20 is connected to one boogie 37 with a group of asynchronous traction engines via a controlled rectifier 38, and the first synchronous traction generator 13 is connected to boogies 39, 40, 41 with the second group of asynchronous traction engines via a controlled rectifier 42 (Figure 2), or the synchronous traction generators 20 and 13 may be connected to the boogies 37, 39, 40, 41 with all the asynchronous traction engines via a common controlled rectifier 43 (Figure 3). In the mode where only the high-pressure shaft is operated, the second synchronous traction generator 20 may be connected either to one boogie 37 with the group of asynchronous traction engines via its controlled rectifier 38, or the second synchronous traction generator 20 may be connected (not shown) to the boogies 37, 39, 40, 41 with all the asynchronous traction engines via the common controlled rectifier 43.

The gas-turbine arrangement cab be operated as follows. Ambient air taken from the air intake chamber with dust filters through the fitting 5, enters, after passing through the rotating inlet guiding apparatus 6, the low-pressure compressor 4 where it is compressed, and then it passes, through the channel 26, to the intermediate cooler 24 where it is cooled by ambient air coming from a fan (not shown) driven by the shaft of the low-pressure compressor 4. This compressed and cooled air enters, through the channel 27, the high-pressure compressor 16 where it is further compressed, and then passes, through the channel 32, to the regenerative heat exchanger 28 where it is heated by exhaust gases of the low-pressure turbine 9 that pass to the regenerative heat exchanger 28 through the channel 35. Then, the heated air enters the combustion chambers 29 where fuel is forced to nozzles through the fuel metering device 34, and, after burning, it forms a gas-air mixture having a pre-determined temperature which mixture passes to the high-pressure turbine 18 through the channel 31. Power taken from the high-pressure turbine is used for driving the high-pressure compressor 16 and for generating energy by the second synchronous traction generator 20. The gas-air mixture from the high-pressure turbine 18 passes through the channel 23 to the intermediate combustion chamber 15 where fuel is supplied to the nozzles through the fuel metering device 33 and, after burning, forms a gas-air mixture having a pre-determined temperature which mixture passes through the channel 14 to the medium-pressure turbine (power turbine) 11 which output power is used for driving the first synchronous traction generator 13. Depending on an applied load, the first and second synchronous generators 13 and 20 drive, via the controlled rectifiers 42 or 43, the asynchronous traction engines on the boogies 37, 39, 40, and 41. The gas-air mixture, after being used in the medium-pressure turbine, enters, through the channel 10, the low-pressure turbine 9 that drives the low-pressure compressor 4. The gas-air mixture, after being used in the low-pressure turbine 9, enters, through the channel 35, the regenerative heat exchanger 28 and, after passing through it, is expelled to the atmosphere through the exhaust fitting 36. Power obtained from the traction generators 13 and 20 is supplied, via the controlled rectifiers, to the asynchronous traction engines according to one of the two paths shown in Figures 2 and 3.

Let's consider the start of the proposed gas-turbine arrangement and its operation at no load and at low loads. Before start, the microprocessor control unit for controlling the gas-turbine arrangement closes the inlet guiding apparatus 6, using the block 7, and opens the bypass valve 25, thus connecting the channel 27 of the high-pressure compressor 16 to the chamber for air intake from the atmosphere. The signal "Start" is fed to the starter 22 and the latter starts rotating the high-pressure shaft 3 until it reaches a rotation speed necessary for supplying fuel to the combustion chamber 29. The fuel metering device 34 supplies fuel to the combustion chamber 29, and the high-pressure shaft 3 rotates until an idling rotation speed is reached. The gas-air mixture, after being used in the high-pressure turbine 18, passes, through the channel 23, to the intermediate combustion chamber 15 that does not receive fuel. Then, the gas-air mixture enters, through the channel 14, to the medium-pressure turbine 11, and then, after passing through the said turbine, passes, through the channel 10, to the low-pressure turbine 9 and further, through the channel 35, to the regenerative heat exchanger 28, and after passing through the latter it is expelled to the atmosphere through the exhaust fitting 36. Due to the fact that the inlet guiding apparatus 6 is closed, and the bypass valve 25 is open, air is not compressed in the low-pressure compressor 4, and the low-pressure and medium-pressure shafts 1 and 2 rotate without performing work, but are in the permanent condition of preparedness to take a load. Power is not taken from the first synchronous traction generator 13. If full power is not required for locomotive operation, i.e., in the idling mode, when taking off, during shunting operations, when a locomotive is moving without any cars, on slopes or with low-weight trains, only the high-pressure shaft 3 is operated. Power taken from the second synchronous traction generator 20 is transferred, through the controlled rectifier 38, to one boogie 37 with the group of asynchronous traction engines, or power taken from the second synchronous traction generator 20 is transferred, through the common controlled rectifier 43, to the boogies 37, 39, 40, 41 with the group of all the asynchronous traction engines.

The specific operation of the proposed gas-turbine arrangement is shown in Figure 4 that illustrates changing the gas-turbine arrangement efficiency depending on relative taken power. When all the pressure shafts 1, 2, and 3 are operated, the gas-turbine arrangement efficiency is changed according to Curve 44, but when only the high-pressure shaft 3 is operated, the gas-turbine arrangement efficiency is changed according to Curve 45. Fuel consumption at no load, when only the high-pressure shaft 3 is operated, is 0.005 - 0.06 of that at full power of the unit. If only the high-pressure shaft 3 is operated at partial loads, the engine efficiency is 2 - 2.5 times higher compared to operation of the whole gas-turbine arrangement, which improves locomotive performance significantly.

### Industrial Applicability

We suppose that the proposed invention may be used for promising gas-turbine engine locomotives and on transport machines running on liquefied natural gas. The use of the gas-turbine arrangement will enable to significantly reduce fuel consumption at no load and at low loads, eliminate use of an auxiliary diesel-generator or high-capacity accumulator in a locomotive, which will enable to reduce locomotive dimensions, weight, axle load and operation expenses.

## Claims

1. A gas-turbine arrangement for a locomotive, comprising three pressure shafts, wherein a high-pressure shaft (3) is arranged above low-pressure (1) and medium-pressure (2) shafts; a low-pressure shaft is provided with a low-pressure compressor (4) having the inlet fitting (5) and being connected by a shaft (8) to a low-pressure turbine (9) and by a gas connection (10) to a medium-pressure turbine (11); a medium-pressure shaft (12) is provided with a medium-pressure turbine connected by a shaft to a first synchronous traction generator (13) and by a channel (14) to a intermediate combustion chamber (15); the high-pressure shaft is provided with a high-pressure compressor (16) connected by a shaft to a high-pressure turbine (18) and by a channel (32) to a main combustion chamber (29); an intermediate cooler (24) is arranged between the low-pressure and high-pressure compressors and connected by channels (26,27) to these compressors; a regenerative heat exchanger (28) is arranged between the high-pressure compressor and the high-pressure turbine and is provided with an exhaust fitting (36) and connected by channels (32,35) to a low-pressure turbine and the high-pressure compressor, the said heat exchanger being provided with a heat exchanger (32) for heating fuel, **characterized in that** the low-pressure compressor is provided with a rotating inlet guiding apparatus (6) driven by a block (7); a bypass valve (25) is installed on an intermediate cooler; the main combustion chambers is arranged in the regenerative heat exchanger that is connected to the high-pressure turbine by a channel (31); the high-pressure compressor is connected to a starter (22) through a shaft (21) and a reduction gear; and the high-pressure turbine is connected to the second synchronous traction generator by a shaft (19) in order to enable the gas-turbine arrangement to be operated at no load and at low loads from the high-pressure shaft only.

2. The gas-turbine arrangement according to Claim 1, **characterized in that** the second synchronous traction generator is connected to one boogie with a group of asynchronous traction engines via a controlled rectifier, and the first synchronous traction generator is connected to boogies with the second group of asynchronous traction engines via a controlled rectifier, or the synchronous traction generators and may be connected to the boogies with all the asynchronous traction engines via a common controlled rectifier; or in the mode where only the high-pressure shaft is operated, the second synchronous traction generator may be connected either to one boogie with the group of asynchronous traction engines via its controlled rectifier, or the second synchronous traction generator may be connected to the boogies with all the asynchronous traction engines via the common controlled rectifier 43.

## Patentansprüche

1. Gasturbinenanordnung für eine Lokomotive, umfassend drei Druckwellen, wobei eine Hochdruckwelle (3) über Niederdruck- und Mitteldruckwellen (1, 2) angeordnet ist; eine Niederdruckwelle mit einem Niederdruckkompressor (4) mit einer Eingangsanschlussstück (5) ausgestattet und mittels Welle (8) zu einer Niederdruckturbine (9) und mittels eines Gasanschlusses (10) mit einer Mitteldruckturbine (11) verbunden ist; eine Mitteldruckwelle (12) mit einer Mitteldruckturbine ausgestattet und durch eine Welle mit einen ersten Synchrontraktionsgenerator (13) und über einen Kanal (14) mit einer Zwischenbrennkammer (15) verbunden ist; die Hochdruckwelle mit einem Hochdruckkompressor (16) ausgestattet und über eine Welle mit einer Hochdruckturbine (18) und über einen Kanal (32) mit einer Brennkammer (29) verbunden ist; ein Zwischenkühler (24) zwischen den Niederdruck- und Hochdruckkompressoren angeordnet und durch Kanäle (26, 27) mit diesen Kompressoren verbunden ist; ein regenerativer Wärmetauscher (28) zwischen dem Hochdruckkompressor und der Hochdruckturbine angeordnet und mit einer Ausgangsanschlussstück (36) und verbunden mit einer Niederdruckturbine und dem Hochdruckkompressor über Kanäle (32, 35) ausgestattet ist, wobei der Wärmetauscher mit einem Wärmetauscher (30) zur Erwärmung von Kraftstoff ausgestattet ist, **dadurch gekennzeichnet, dass** der Niederdruckkompressor mit einer durch einen Block (7) angetriebenen rotierenden Einlaufleitvorrichtung (6) ausgestattet ist; an einem Zwischenkühler ein Umgehungsventil (25) installiert ist; die Hauptbrennkammer dem regenerativen Wärmetauscher angeordnet ist, der mit der Hochdruckturbine durch einen Kanal (31) verbunden ist; der Hochdruckkompressor mit dem Starter (22) mittels einer Welle (21) und eines Untersetzungsgetriebes verbunden ist; und die Hochdruckturbine mit dem zweiten Synchrontraktionsgenerator durch eine Welle (19) verbunden ist um der Gasturbinenanordnung zu ermöglichen nur von der Hochdruckwelle im Leerlauf und bei geringer Last angetrieben zu werden.

2. Gasturbinenanordnung nach Anspruch 1, **dadurch gekennzeichnet, dass** der zweite Synchrontraktionsgenerator mit einem Wagen mit einer Gruppe von asynchronen Traktionsmotoren über einen gesteuerten Gleichrichter verbunden ist, und der erste Synchrontraktionsgenerator mit Wagen mit der zweiten Gruppe von asynchronen Traktionsmotoren mittels gesteuerten Gleichrichter verbunden ist oder die Synchrontraktionsgeneratoren sind mit den Wagen mit allen asynchronen Traktionsmotoren über einen gemeinsamen Gleichrichter verbunden; oder in dem Modus, in dem nur die Hochdruckwelle tätig ist, wird der zweite Traktionsgenerator entweder mit einem Wagen mit der Gruppe von asynchronen Traktionsmotoren durch seinen gesteuerten Gleichrichter verbunden, oder der zweite Synchrontraktionsgenerator wird mit den Wagen mit all den synchronen Traktionsmotoren über den gemeinsamen gesteuerten Gleichrichter 43 verbunden.

## Revendications

1. Agencement de turbine à gaz pour une locomotive, comprenant trois arbres de pression, dans lequel un arbre haute pression (3) est agencé au-dessus des arbres basse pression (1) et moyenne pression (2) ; un arbre basse pression est prévu avec un compresseur basse pression (4) ayant le raccord d'entrée (5) et étant raccordé par un arbre (8) à une turbine basse pression (9) et par un raccordement à gaz (10) à une turbine moyenne pression (11) ; un arbre moyenne pression (12) est prévu avec une turbine moyenne pression raccordée par un arbre à un premier générateur de traction synchrone (13) et par un canal (14) à une chambre de combustion intermédiaire (15) ; l'arbre haute pression est prévu avec un compresseur haute pression (16) raccordé par un arbre à une turbine haute pression (18) et par un canal (32) à une chambre de combustion principale (29) ; un refroidisseur intermédiaire (24) est agencé entre les compresseurs basse pression et haute pression et raccordé par des canaux (26, 27) à ces compresseurs ; un échangeur à récupérateur de chaleur (28) est agencé entre le compresseur haute pression et la turbine haute pression et est prévu avec un raccord d'échappement (36) et raccordé par des canaux (32, 35) à une turbine basse pression et au compresseur haute pression, ledit échangeur de chaleur étant prévu avec un échangeur de chaleur (30) pour chauffer du combustible, **caractérisé en ce que** le compresseur basse pression est prévu avec un appareil de guidage d'entrée rotatif (6) entraîné par un bloc (7) ; une valve de dérivation (25) est installée sur un refroidisseur intermédiaire ; la chambre de combustion principale est agencée dans l'échangeur à récupérateur de chaleur qui est raccordé à la turbine haute pression par un canal (31) ; le compresseur haute pression est raccordé à un démarreur (22) par le biais d'un arbre (21) et d'un engrenage réducteur ; et la turbine haute pression est raccordée au second générateur de traction synchrone par un arbre (19) afin de permettre l'actionnement de l'agencement de turbine à gaz sans charge et à de faibles charges uniquement à partir de l'arbre haute pression.

2. Agencent de turbine à gaz selon la revendication 1, **caractérisé en ce que** le second générateur de traction synchrone est raccordé à un train roulant avec un groupe de moteurs de traction asynchrones via un rectificateur commandé et le premier générateur de traction synchrone est raccordé aux trains roulants avec le second groupe de moteurs de traction asynchrones via un rectificateur commandé ou bien les générateurs de traction synchrones peuvent être raccordés aux trains roulants avec tous les moteurs de traction asynchrones via un rectificateur commandé commun ; ou dans le mode dans lequel seul l'arbre haute pression est actionné, le second générateur de traction synchrone peut être raccordé à un train roulant avec le groupe de moteurs de traction asynchrones via son rectificateur commandé ou le second générateur de traction synchrone peut être raccordé aux trains roulants avec tous les moteurs de traction asynchrones via le rectificateur commandé commun (43).
